# NEUE EUROPÄISCHE PATENTSCHRIFT

(11) **EP 2 408 859 B2**
(45) Veröffentlichungstag und Bekanntmachung des Hinweises auf die Entscheidung über den Einspruch: **13.07.2016**
(45) Hinweis auf die Patenterteilung: 12.12.2012
(21) Anmeldenummer: 10708982.3
(22) Anmeldetag: 12.03.2010
(51) Int. Cl.: C08L 27/18, C08L 71/00, F16L 11/00, H01B 3/30

(54) **POLYMERCOMPOUND SOWIE BAUTEILE, HERGESTELLT UNTER VERWENDUNG DES COMPOUNDS**
POLYMER COMPOUND AND COMPOUNDS PRODUCED USING THE COMPOUND
MÉLANGE POLYMÈRE, AINSI QUE PIÈCES FABRIQUÉES PAR UTILISATION DU MÉLANGE

(30) Priorität: 18.03.2009 DE 102009014974
(43) Veröffentlichungstag der Anmeldung: 25.01.2012
(60) Teilanmeldung: 12194333.6
(73) Patentinhaber: ElringKlinger AG, 72581 Dettingen (DE)
(72) Erfinder: SCHLIPF, Michael, 89520 Heidenheim (DE); STERN, Claudia, Tannhausen 73497 (DE); MAIER, Martin, Ingersheim 74379 (DE)
(74) Vertreter: Hoeger, Stellrecht & Partner Patentanwälte mbB
(86) Internationale Anmeldenummer: PCT/EP2010/053218
(87) Internationale Veröffentlichungsnummer: WO 2010/105990

(56) Entgegenhaltungen:
- EP-A1- 0 902 049
- WO-A1-01/60911
- WO-A1-03/078481
- WO-A1-2007/147271
- WO-A1-2010/031844
- DE-A1- 3 912 716
- DE-A1- 19 619 232
- DE-A1-102005 054 612
- DE-T2- 69 717 832
- DE-T2- 69 817 708
- GB-A- 2 437 830
- US-A- 5 823 540
- DIN EN ISO 12086-1, Seiten 1 bis 8, vom Mai 2006
- DIN EN ISO 12086-1, Seiten 30 und 31, vom Mai 2006
- J. SCHEIRS: 'Modern Fluoropolymers', 1997, JOHN WILEY & SONS, NEW YORK Seiten 223 - 237
- J. FALBER, PROF. DR. ET AL.: 'Römmp-Chemie Lexikon', Bd. 9, 1992, GEORG THIEME VERLA, STUTTGART Seite 3530

## Beschreibung

Die Erfindung betrifft ein neuartiges Polymercompound umfassend ein voll fluoriertes thermoplastisches Kunststoffmaterial, insbesondere schmelzverarbeitbares PTFE (m-PTFE), sowie einen Anteil mindestens eines weiteren, hiervon verschiedenen Hochleistungs-Polymers ausgewählt aus der Gruppe von Polyetherketon (PEK), Polyetheretherketon (PEEK) und Polyetherarylketon (PEAK) sowie Copolymeren und Derivaten dieser Polymere und Copolymere, wobei das Compound eine homogene Verteilung der Anteile der Polymere aufweist.

Die Verwendung von herkömmlichem PTFE in Compounds mit Polyetheretherketonen ist an sich bekannt. Solche Compounds werden durch eine Vermischung der verschiedenen Polymere in Pulverform und, je nach Art der Hauptkomponente, durch anschließendes Press-Sintern oder Extrudieren hergestellt. Stellt das PTFE die Hauptkomponente dar ist der Anteil an Polyetheretherketon auf max. ca. 30 Gew.-% beschränkt. Im Fall, dass der Hauptbestandteil Polyetheretherketon ist, ist der PTFE-Anteil auf max. 20 Gew.-% beschränkt.

Im ersten Fall werden bei PEEK-Anteilen oberhalb 20 Gew.-% die mechanischen Eigenschaften wie z.B. die Bruchspannung und die Bruchdehnung merklich schlechter, da der hohe PEEK-Anteil, der als eine Art Füllstoff in der PTFE-Matrix wirkt, den Zusammenhalt der PTFE-Matrix signifikant stört.

Im zweiten Fall haben größere PTFE-Gehalte zunächst zur Folge, dass das Compound mit dem Hauptbestandteil PEEK nicht mehr nach den klassischen Methoden der Thermoplastverarbeitung verarbeitbar ist.

Wendet man das sogenannte Hot-Compression-Moulding-Verfahren an, sind etwas höhere PTFE-Anteile bis ca. 30 Gew.-% möglich. Bei noch höheren PTFE-Anteilen wird die PEEK-Matrix signifikant gestört und die mechanischen Werkstoffeigenschaften fallen drastisch ab.

Unbefriedigend bei diesen Compounds ist, dass diese nicht mit einem homogenen Schmelzgefüge erhalten werden können. Die durch die Compoundierung mit dem anderen Polymeranteil angestrebten Verbesserungen der Eigenschaften der jeweiligen Hauptkomponenten können deshalb bestenfalls in geringem Umfang erzielt werden.

Aus diesen Gründen sind Compounds mit dazwischen liegenden Mischungsverhältnissen nicht verfügbar.

Typischerweise bleiben bei Compounds mit dem Hauptbestandteil PEEK bei den beschriebenen Verfahren die PTFE-Partikel auch nach der ThermoplastVerarbeitung noch als individuell erkennbare Körner erhalten. Zwar schmelzen auch die Partikel der PTFE-Komponente unter den für PEEK üblichen Verarbeitungstemperaturen von typischerweise 370 °C ± 10 °C vollständig auf, jedoch erfolgt wegen der hohen Schmelzviskosität des PTFE, die typischerweise bei 380 °C ca. 10¹⁰ bis 10¹³ Pa • s beträgt, bei den üblichen Behandlungszeiten von beispielsweise 15 bis 60 min keine ausreichende Vermischung der beiden Polymerschmelzen.

Bei Compounds mit dem Hauptbestandteil PTFE bleiben die PEEK-Partikel auch nach Durchlaufen der für PTFE üblichen Verarbeitungsverfahren als individuelle Partikel erhalten, obwohl zwar beide Komponenten unter den für PTFE üblichen Sintertemperaturen von ca. 360 bis 380 °C aufschmelzen, jedoch einerseits wegen der hohen Schmelzeviskosität des PTFE und andererseits wegen der Tatsache, dass bei diesen PTFE-typischen Verarbeitungsverfahren keine Scherkräfte auf die Polymerschmelze einwirken, keine oder nur geringfügige gegenseitige Vermischungseffekte auftreten.

Aufgabe der Erfindung ist es, Polymercompounds zur Verfügung zu stellen, die in Bezug auf ihre Eigenschaften gegenüber herkömmlichem PTFE einerseits und dem oder den weiteren Hochleistungs-Polymeren andererseits verbessert sind.

Diese Aufgabe wird durch ein Polymercompound entsprechend der Definition des Anspruchs 1 gelöst.

Aufgrund der Auswahl der PTFE-Komponente als voll fluoriertes thermoplastisches Kunststoffmaterial lässt sich das Compound mit großer Homogenität in der Gefügeausbildung erhalten.

Dies zeigt sich insbesondere daran, dass bei den erfindungsgemäßen Compounds nach Verarbeitung durch für Thermoplaste übliche Methoden, also beispielsweise mittels Extrusion oder Spritzgussverfahren, im erstarrten Endprodukt die einzelnen Komponenten nicht mehr als ursprüngliches Gemisch zweier pulverförmiger Stoffe identifizierbar sind.

Im Gegensatz zu den erfindungsgemäßen Compounds lassen sich durch spezielle Methoden, z.B. Anfärbetechniken in Verbindung mit Lichtmikroskop, oder unter Verwendung von polarisiertem Licht, in herkömmlichen Compounds Phasen der Einzelkomponenten erkennen. Je nach Typ des verwendeten PTFE verbleiben in dem Compound größere oder kleinere PTFE-Inselstrukturen erhalten, bei emulsionspolymerisiertem PTFE mit typischen Ausdehnungen von ca. 0,2 µm oder mehr, im Falle von suspensionspolymerisiertem PTFE mit typischen Ausdehnungen von ca. 15 µm oder mehr.

Das erfindungsgemäße Compound ist demgegenüber im Wesentlichen frei von PTFE-Inselstrukturen.

Bei den erfindungsgemäßen Compounds entfällt eine Beschränkung der Mischungsverhältnisse wie oben ausgeführt, und die Zusammensetzung des Compounds kann bezüglich der Anteile an voll fluoriertem thermoplastischem Kunststoffmaterial, insbesondere schmelzverarbeitbarem PTFE, sowie der oder den weiteren Hochleistungs-Polymer-Komponente(n) in weiten Bereichen variiert werden.

Überraschenderweise zeigen die erfindungsgemäßen Compounds erheblich verbesserte mechanische Eigenschaften gegenüber den herkömmlichen PTFE-Compounds und erschließen sich damit eine Vielzahl von Einsatzmöglichkeiten.

Insbesondere lassen sich erfindungsgemäße Compounds, die einen hohen PEEK-Anteil und einen niederen Anteil an thermoplastisch verarbeitbarem PTFE enthalten, mit hoher Bruchdehnung, d.h. Bruchdehnungswerten von 20 % und mehr, weiter bevorzugt 30 % und mehr, herstellen. Die angegebenen Bruchdehnungswerte entsprechen Werten aus Tests gemäß DIN EN ISO 527-1 unter Verwendung von Prüfkörpern Typ V gemäß ASTM D-638.

Diese Eigenschaften sind insbesondere dann gefordert, wenn zum Einen das typische Eigenschaftsspektrum der Reinkomponente PEEK, also ein hoher E-Modul, ein hoher Deformationswiderstand und eine hohe Bruchfestigkeit, gefordert sind, zum Anderen aber die hohe Sprödigkeit des PEEK einen erfolgreichen Einsatz verhindert.

Anwendungen mit diesem Anforderungsprofil sind beispielsweise groß dimensionierte Dichtungen in Anlagen zur Ölförderung, einschließlich Behälter, Schläuche oder Rohre von Ölfördertürmen oder Ölförderschiffen oder allgemein des Chemieanlagenbaues, in denen Dichtungen aus den erfindungsgemäßen Werkstoffen für eine sichere Abdichtung Fertigungstoleranzen von Stahlkonstruktionen kompensieren müssen, was eine hohe Anpassungsfähigkeit erfordert. Auch unterliegen diese Anlagen im Einsatz hohen Temperatur-, Krafteintrags- und Druckschwankungen mit den daraus resultierenden Dimensionsänderungen, was eine gute Folgefähigkeit des Dichtungswerkstoffes erforderlich macht.

Auch lassen sich erfindungsgemäße Compounds, die einen hohen Anteil an voll fluoriertem thermoplastisch verarbeitbarem Kunststoffmaterial, insbesondere schmelzverarbeitbarem PTFE, aufweisen, mit niedrigen dielektrischen Kennwerten, beispielsweise einer relativen Dielektrizitätskonstante ε von 2,1 und einem dielektrischen Verlustfaktor tan δ = 0,3 x 10⁻³ oder geringfügig mehr (beide Werte ermittelt bei 25 GHz) herstellen.

PTFE-Materialien, insbesondere auch Standard-PTFE, haben von Haus aus weit höhere Bruchdehnungswerte als PEEK. Aber auch hier beobachtet man bei größer werdenden PEEK-Anteilen im Compound einen drastischen Abfall der Bruchdehnungswerte. Die erfindungsgemäßen Compounds weisen demgegenüber bei gleichen Verhältnissen der Anteile an voll fluoriertem Kunststoffmaterial zu weiterem Hochleistungspolymer, insbesondere auch PEEK, deutlich günstigere Bruchdehnungswerte auf, die in einer Vielzahl an Applikationen von großer Bedeutung sind.

Diese sind besonders geeignet für die Herstellung von Komponenten und Bauteilen der Hochfrequenztechnik, also z.B. in Kabeln, insbesondere Koaxialkabel, Leiterplatten und Platinen oder den Antennen von Abstandsradaranlagen in PKWs und NKWs oder in Sende- und Empfängereinrichtungen des Mobilfunks und der Telekommunikation. Auch beim Bau von Satelliten für die Nachrichtenübertragung, für die globale Positionsbestimmung oder spezielle Observationsaufgaben lassen sich Komponenten auf Basis der erfindungsgemäßen Compounds bevorzugt einsetzen.

Darüber hinaus eignen sich die erfindungsgemäßen Compounds zur Herstellung hochtemperaturfester Bauteile, die ein günstiges Brandverhalten zeigen. Solche Bauteile sind im Flugzeugbau von großem Interesse, beispielsweise in Form von flexiblen elektrischen Kabeln.

Bei der Verwendung der erfindungsgemäßen Compounds zur Herstellung von Kabelisolierungen kommen insbesondere deren bessere elektrische Eigenschaften sowie die höhere Durchschlagfestigkeit zum Tragen.

Die erfindungsgemäßen Compounds eignen sich außerdem hervorragend für die Herstellung von Spritzguss-Formteilen, wobei insbesondere die hohe mechanische Festigkeit der erhaltenen Bauteile gegenüber Druck- und Zugbelastungen von Vorteil sind.

Bei der Herstellung von Schläuchen spielen die mit den erfindungsgemäßen Compounds erzielbaren höheren mechanischen Festigkeitswerte, die höhere Druckbeständigkeit und der damit verbundene höhere Berstdruck sowie die höhere Druckstandfestigkeit bei der Langzeit- Druckbelastung sowohl bei Raumtemperatur als auch bei Temperaturen bis zu 250 °C eine große Rolle.

Nicht zuletzt sind mit den erfindungsgemäßen Compounds geschäumte Materialien herstellbar, bei denen eine engere Porengrößenverteilung, geringere Dichten und damit verbunden bessere Isolationseigenschaften, insbesondere auch bei Kabelisolierungen, möglich werden. Unter die genannten Kabelisolierungen fallen beispielsweise die Außenisolierung eines zentral positionierten Innenleiters oder das isolierende Dielektrikum eines Koaxialkabels, das konzentrisch zwischen dem Innenleiter und dem umhüllenden Außenleiter positioniert ist.

Darüber hinaus ermöglichen die erfindungsgemäßen Compounds die Herstellung weiterer Materialien mit hoher Flexibilität, beispielsweise Folien, wie sie z.B. für die Herstellung von flexiblen Leiterplatten benötigt werden. Eine Moldflon^{®}-Folie der Stärke 50 µm weist nach dem Testverfahren IPC-TM-650, 2.4.3 typischerweise eine Biegewechselfestigkeit von > 1,2 Mio. Testzyklen auf. Festigkeitswerte lassen sich mit dem weiteren Hochleistungs-Polymer erfindungsgemäß steigern, ohne dass die Biegewechselfestigkeit merklich leidet. Neben der Verwendung für flexible Leiterplatten sind die erfindungsgemäßen Compounds auch bestens geeignet für die Herstellung von Starrflex-Leiterplatten.

Ferner lassen sich erfindungsgemäße Compounds mit verbesserten Gleiteigenschaften herstellen, wobei einerseits ein Stick-Slip-Effekt vermieden werden kann und andererseits der Reibungskoeffizient sehr niedrig ist, insbesondere bei den erfindungsgemäßen Compounds mit hohem Anteil an schmelzverarbeitbarem PTFE. Hier sind bei einer Gleitgeschwindigkeit von V = 0,6 m/sec und einer Belastung senkrecht zur Gleitrichtung von 0,5 bis 1,5 N/mm² Reibungskoeffizienten im Bereich von 0,1 bis 0,3 möglich.

Eine der Folgen des niederen Reibungskoeffizienten sind die geringen Verschleißwerte der erfindungsgemäßen Compounds.

Darüber hinaus sind Bauteile aus den erfindungsgemäßen Compounds auch für höhere spezifische Flächenpressungen geeignet, zeigen einen geringeren Abrieb und damit eine längere Lebensdauer.

Die vorgenannten Vorteile der erfindungsgemäßen Compounds gelten für den Vergleich eines voll fluorierten thermoplastischen Polymermaterials, insbesondere mit m-PTFE, mit Compounds mit gleicher prozentualer Zusammensetzung, bei denen als voll fluorierte Komponente Standard-PTFE oder chemisch modifiziertes, hochmolekulares PTFE zum Einsatz gelangt.

Bevorzugt werden die erfindungsgemäßen Compounds auf dem Weg der Schmelze-Compoundierung hergestellt.

Als voll fluorierte thermoplastische Kunststoffmaterialien werden TFE-Copolymere verwender, bei denen der Comonomeranteil weniger als 3,5 Mol-% beträgt, da hier die PTFE-Eigenschaften weitgehend erhalten bleiben und trotzdem eine thermoplastische Verarbeitung möglich ist. Bevorzugt ist der Comonomeranteil beschränkt auf weniger als ca. 3 Mol-%, noch weiter bevorzugt sind Comonomeranteile von weniger als ca. 2,5 Mol-%, beispielsweise 1 Mol-% oder weniger bzw. 0,5 Mol-% oder weniger.

Bevorzugte Comonomere, die einerseits eine gute thermoplastische Verarbeitbarkeit gewährleisten und andererseits die Materialeigenschaften gegenüber herkömmlichem PTFE weitgehend unverändert lassen, sind Hexafluorpropylen, Perfluoralkylvinylether, Perfluor-(2,2-dimethyl-1,3-dioxol) und Chlortrifluorethylen.

Auch Copolymere von TFE mit Chlortrifluorethylen werden im Zusammenhang mit der vorliegenden Erfindung unter voll fluorierte Kunststoffmaterialien subsummiert, da der von Fluor verschiedene Halogenanteil vergleichsweise gering ist.

Besonders bevorzugt wird thermoplastisch verarbeitbares PTFE, auch schmelzverarbeitbares PTFE oder kurz m-PTFE genannt, verwendet. Eine Vielzahl solcher Materialien ist beispielsweise in der WO 01/60911 und der WO 03/078481 beschreiben.

Als erfindungsgemäß zu verwendendes voll fluoriertes Kunststoffmaterial kommen neben den TFE-Copolymeren auch Polymerblends von PTFE und einem oder mehreren weiteren thermoplastisch verarbeitbaren fluorierten Kunststoffen zum Einsatz.

Diese weiteren voll halogenierten Kunststoffmaterialien werden insbesondere ausgewählt aus der Gruppe der PTFE-Mikropulver. Hierbei handelt es sich um PTFE-Typen mit im Vergleich zu hochmolekularem (Standard) PTFE niederem Molekulargewicht und niederer Schmelzviskosität. Sie werden typischerweise hergestellt entweder durch Emulsionspolymerisation, durch thermomechanischen Abbau von hochmolekularem PTFE im Extruder oder durch Strahlenabbau von hochmolekularem PTFE, gefolgt von einem Mahlprozess.

Die Eigenschaftsunterschiede von herkömmlichem oder hochmolekularem (Standard) PTFE und niedermolekularen PTFE-Mikropulvern lassen sich beispielsweise wie folgt darstellen (vgl. S. Ebnesajjad, Fluoroplastics, Vol. 1, Non-Melt Processible Fluoro-plastics, Verlag William Andrew Publishing, 2000):

| Produkt | Molekulargewicht | Schmelzviskosität bei 380 °C in Pa·s |
|---|---|---|
| Standard PTFE | ca. 10⁶ - ca. 10⁸ | ca. 10¹⁰ - ca. 10¹³ |
| Mikropulver | ca. 10⁴ - ca. 10⁶ | ca. 10² - ca. 10⁵ |

Beispiele für solche Polymerblends finden sich ebenfalls in den Offenlegungsschriften WO 01/60911 und WO 03/078481.

Hervorzuheben ist die Eigenschaft der erfindungsgemäßen Compounds, sich gut auf zerspanenden CNC-Maschinen verarbeiten zu lassen. Dies eröffnet den erfindungsgemäßen Compounds eine Vielzahl von interessanten Anwendungsgebieten, die den auf herkömmlichem PTFE basierenden Compounds bislang verschlossen waren.

Bevorzugte erfindungsgemäße Compounds können Additive enthalten, insbesondere in Mengenanteilen von bis zu 60 Gew.-%, bezogen auf die Gesamtmasse des Compounds. Besonders bevorzugte erfindungsgemäße Compounds enhalten bis zu 40 Gew.-% an Additiven.

Typische Untergrenzen für Additive liegen bei ca. 0,5 Gew.-%.

Sind Farbstoffe als Additive in dem Compound enthalten, liegt die Untergrenze für diesen Typ Additiv typisch bei ca. 0,01 Gew.-%. Die Obergrenze für Farbstoffanteile im Compound liegt typischerweise bei ca. 3 Gew.-%.

Als Additive kommen des weiteren sowohl organische als auch anorganische Füllstoffe in Betracht.

Die Füllstoffe können insbesondere in Faserform, granular oder in Nadelform vorliegen.

Besonders bevorzugt sind funktionelle Füllstoffe, wie z.B. Festschmierstoffe wie z.B. MoS₂, PTFE, Graphit und dgl. Hier kommt insbesondere auch im Fall von (Standard) PTFE als Füllstoff der Vorteil des erfindungsgemäßen Compounds zum Tragen, dass sich die verbesserten mechanischen Eigenschaften des Compounds durch Füllstoffanteile nicht merklich verschlechtern, wenn die Anteile sich in den oben skizzierten Grenzen halten.

So lassen sich mit (konventionellem) PTFE als Füllstoff insbesondere im Brandfall nicht-tropfende Kunststoffmaterialien erzielen, die gegenüber den herkömmlichen Materialien in den mechanischen Eigenschaften überlegen sind. Diese Materialien eignen sich besonders als Baustoffe, die in öffentlichen Gebäuden und Einrichtungen Verwendung finden.

Weitere geeignete verstärkende Füllstoffe sind z.B. Glasfasern und Kohlefasern.

Ruß eignet sich als Füllstoff, um zum einen eine gewünschte, elektrische Leitfähigkeit herzustellen, zum anderen lässt sich Ruß auch als Gleitreibung mindernder Füllstoff einsetzen.

Diese und weitere Vorteile der Erfindung werden im Folgenden anhand der Beispiele und Figuren noch im Einzelnen erläutert.

Es zeigen:

| | |
|---|---|
| Figur 1: | |
| | lichtmikroskopische Aufnahme eines aus einem erfindungsgemä-βen Compound hergestellten Bauteils; |
| Figur 2: | |
| | lichtmikroskopische Aufnahme eines aus einem herkömmlichen Compound hergestellten Bauteils; |
| Figur 3: | |
| | Probekörper (schematisch) nach ASTM D1710 im Längsschnitt; |
| Figur 4: | |
| | Schnittansicht durch den Probekörper längs Linie IV - IV; und |
| Figur 5: | |
| | Draufsicht auf einen Probekörper nach SPI-Standard FD-105. |

### Beispiele

### Vergleichsbeispiel 1

Aus dem kommerziell erhältlichen Kunststoffmaterial Victrex^{®} 450FE20 (80 Gew.-% PEEK und 20 Gew.-% PTFE) wurde mittels klassischer Extrusion ein Rohr gefertigt mit einem Außendurchmesser von 10,9 mm und einem Innendurchmesser von 6,9 mm.

Die Verarbeitungsbedingungen des Kunststoff-Materials sind in Tabelle 1 zusammengefasst. Zum Einsatz kam ein antikorrosiv ausgerüsteter Einschneckenextruder mit einem Schneckendurchmesser D von 30 mm und einer Schneckenlänge L von 25 x D.

**Tabelle 1**

| **Parameter** | **Einheit** | **Wert** |
|---|---|---|
| Extruder | | |
| Schneckendurchmesser | mm | 30 |
| L/D | - | 25 |
| Temperaturen | | |
| C1 | °C | 360 |
| C2 | °C | 365 |
| C3 | °C | 360 |
| C4 | °C | 350 |
| Traverse | °C | 350 |
| Düse | °C | 345 |
| Schneckendrehzahl | U/min | 59 |
| Massedruck | bar | 56 |
| Massetemperatur | °C | 376 |
| Abzugsgeschwindigkeit | m/min | 1,6 |
| Düsentyp | | Schlauch |
| DDR (Draw Down Ratio) | - | 1,01 |
| DRB (Draw Ratio Balance) | - | 0,99 |

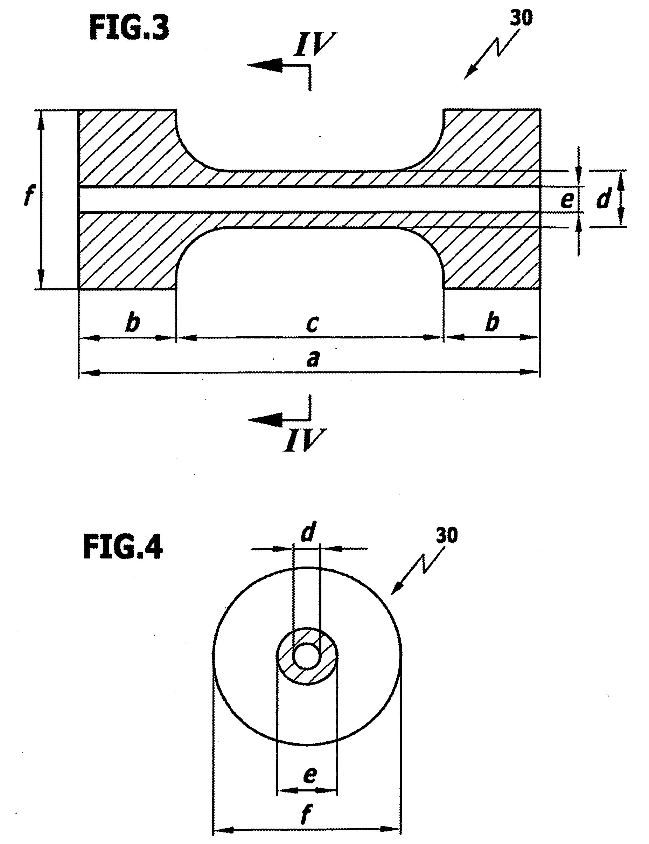

Aus dem Rohr wurde mittels spanender Verarbeitung ein Probekörper 30 gefertigt, wie er schematisch in den Figuren 3 und 4 dargestellt ist. Die einzelnen Abmessungen des Probekörpers 30 waren wie folgt:

| | |
|---|---|
| a = | 75 mm |
| b = | 25 mm |
| c = | 25 mm |
| d = | 6,9 mm |
| e = | 9mm |
| f = | 10,9 mm |

Der Probekörper wurde einer Prüfung sowohl bezüglich des E-Moduls und der Bruchspannung als auch der Bruchdehnung unterzogen. Die Messwerte sind der Tabelle 2 zu entnehmen.

Die Prüfkörper wurden darüber hinaus einer Temperung bei 200 °C für 1 h unterzogen und auf die oben genannten mechanischen Eigenschaften erneut geprüft. Die erhaltenen Messwerte sind ebenfalls in der Tabelle 2 enthalten.

Die Messwerte wurden bei Zugversuchen in Anlehnung an DIN EN ISO 527-2 erhalten.

Neben den Messwerten sind in der Tabelle 2 auch die zugehörigen Standardabweichungen, die sich aus jeweils 5 Messungen ergeben, enthalten.

**Tabelle 2**

| | **E-Modul [N/mm²]** | **Bruchspannung [N/mm²]** | **Bruchdehnung [%]** |
|---|---|---|---|
| Vergleichsbeispiel 1 | 3120 ± 300 | 68 ± 3 | 13 ± 2 |
| Vergleichsbeispiel 1 (therm. behandelt) | 3160 ± 70 | 70 ± 2 | 8 ± 1 |
| Beispiel 1 | 3630 ± 90 | 80 ± 3 | 49±2 |
| Beispiel 1 (therm. behandelt) | 3700 ± 160 | 88 ± 4 | 33 ± 5 |

### Beispiel 1

Ein erfindungsgemäßes Compound aus 80 Gew.-% PEEK und 20 Gew.-% m-PTFE vom Typ Moldflon^{®} 10005 wurde in einem thermoplastischen Mischvorgang in einem antikorrosiv ausgerüsteten Doppelschneckenextruder hergetellt. Die dabei verwendeten Verarbeitungsbedingungen sind in Tabelle 3 zusammengefasst.

Das verwendete PEEK-Material ist als Victrex^{®} PEEK 450 G im Handel.

Moldflon^{®} 10005 ist ein m-PTFE-Polymer modifiziert mit einem Comonomeren-Gehalt von 1,7 Gew.-% PPVE. Die Schmelzfließrate MFR (372 / 5) beträgt 5 g/10 min.

**Tabelle 3**

| **Parameter** | **Einheit** | **Wert** |
|---|---|---|
| Extruder | | |
| Schneckendurchmesser | mm | 25 |
| L/D | - | 42 |
| Temperaturen | | |
| C1 | °C | 355 |
| C2 | °C | 365 |
| C3 | °C | 375 |
| C4 | °C | 385 |
| Extruder | | |
| C5 | °C | 395 |
| Düse | °C | 360 |
| Schneckendrehzahl | U/min | 120 |
| Massedruck | bar | 10 |
| Massetemperatur | °C | 378 |

Aus dem so erhaltenen Compound wurden Rohre entsprechend dem Vergleichsbeispiel mittels klassischer Extrusion hergestellt. Die Verarbeitungsbedingungen waren wie in Tabelle 1 angegeben.

Aus den Rohren wurden analog dem Vergleichsbeispiel 1 Prüfkörper 30 gefertigt. Die mittels Zugversuchen erhaltenen Messwerte sind in der Tabelle 2 zusammen mit den zugehörigen Standardabweichungen, erhalten aus 5 Messungen, zusammengestellt.

Aus dem Vergleich der für die Proben erhaltenen Messwerte (siehe Tabelle 2) ergeben sich die überlegenen mechanischen Eigenschaften der erfindungsgemäßen Compounds bzw. der daraus hergestellten Prüfkörper 30. Insbesondere erhält man eine Bruchdehnung, die um das 5-fache höher ist als bei den Vergleichsproben.

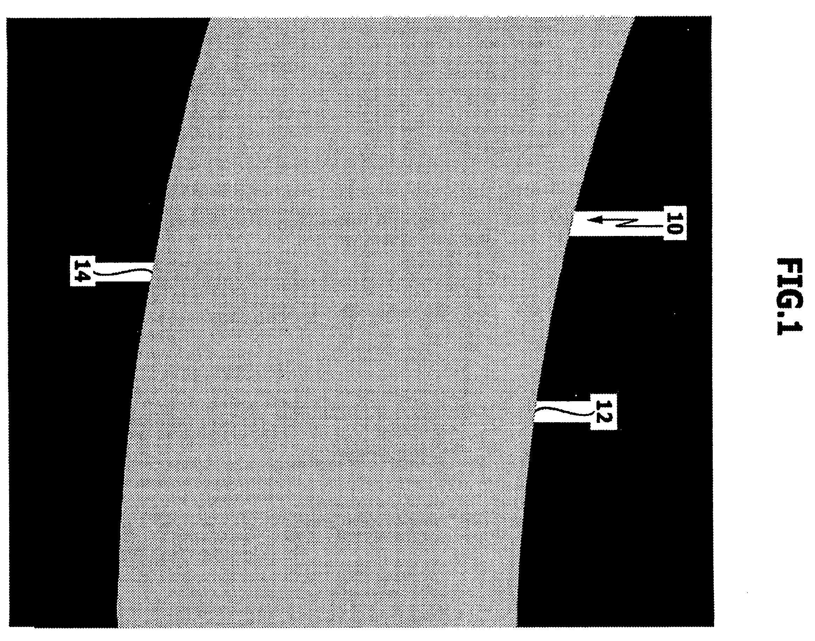

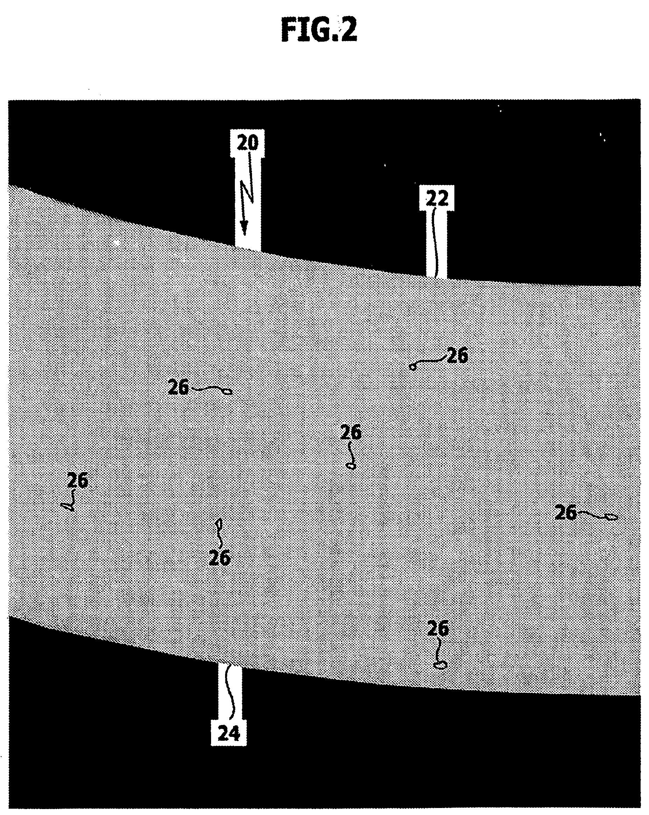

Aufgrund der ausgezeichneten Schmelzeverarbeitbarkeit der erfindungsgemä-βen Compounds sind die erfindungsgemäßen Proben im Gegensatz zu den aus herkömmlichen Compounds hergestellten frei von Poren (vgl. Abbildungen der Figuren 1 und 2).

Die verbesserte Homogenität in der Verteilung der beiden Polymermaterialien der Compounds der erfindungsgemäßen Proben ist aus dem Vergleich der Abbildungen der Figuren 1 und 2 ersichtlich.

Figur 1 zeigt einen Ausschnitt einer lichtmikroskopischen Aufnahme der Zylinderwand 10 des nach Beispiel 1 erhaltenen Rohrs, die eine vollständig homogene Verteilung der beiden Polymerkomponenten PEEK und m-PTFE über die gesamte Wanddicke von der Innenoberfläche 12 bis zur Außenoberfläche 14 erkennen lässt. Der radiale Abstand von Innenoberfläche 12 zur Außenoberfläche 14 beträgt 900 µm.

Demgegenüber sind in der Figur 2, in der ein Ausschnitt der Zylinderwand 20 des Rohrs aus Vergleichsbeispiel 1 in einer lichtmikroskopischen Aufnahme dargestellt ist, deutlich die PTFE-Anteile in der Art einer Inselstruktur erkennbar. Die PTFE-Anteile der Inselstruktur sind beispielhaft als Bereiche 26 in der Figur 2 nachgezeichnet. Der radiale Abstand von Innenoberfläche 22 zur Au-βenoberfläche 24 beträgt 900 µm.

### Beispiele 2 bis 4

Erfindungsgemäße Polymer-Compounds aus PEEK und m-PTFE mit unterschiedlichen Mischungsverhältnissen wurden, wie im Beispiel 1 erläutert, im Doppelschneckenextruder mittels thermoplastischem Mischen hergestellt. Die Verarbeitungsbedingungen können der Tabelle 3 entnommen werden.

Aus den Compounds mit Mischungsverhältnissen von 20 Gew.-% PEEK und 80 Gew.-% Moldflon^{®} 10005 (Referenz-Beispiel 2) sowie 40 Gew.-% PEEK und 60 Gew.-% Moldflon^{®} 10005 (Beispiel 3) und 80 Gew.-% PEEK und 20 Gew.-% Moldflon^{®} 10005 (Beispiel 4) wurden im klassischen Schmelzepressverfahren bei einer Temperatur von 360 °C Prüfplatten in Scheibenform mit einem Durchmesser von 60 mm und einer Dicke von 1,5 mm gefertigt. Als PEEK-Material kam wiederum die Type Victrex^{®} 450 G zur Anwendung.

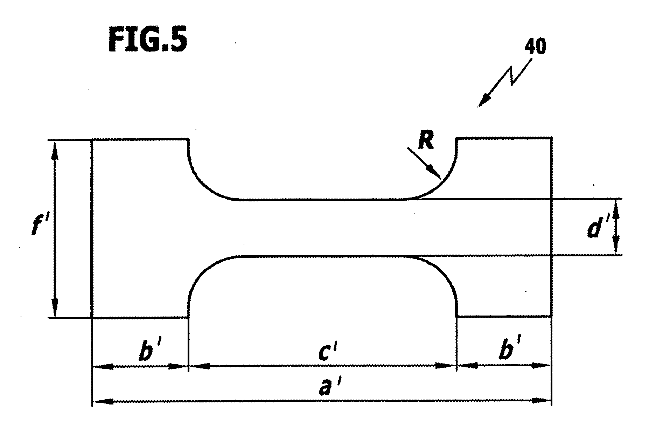

Aus den Prüfplatten wurden FD-105-Probekörper 40 nach DIN EN ISO 12086 (vgl. Figur 5) gestanzt und die mechanischen Kennwerte E-Modul, Bruchspannung und Bruchdehnung gemäß DIN EN ISO 527-2 geprüft. Die erhaltenen Messwerte sind in Tabelle 4 aufgeführt. Die Abmessungen des Prüfkörpers 40 der Figur 5 waren wie folgt:

| | | | |
|---|---|---|---|
| a'= | 38 mm | | |
| b'= | 8 mm | | |
| c'= | 22 mm | | |
| e'= | 5 mm | | |
| f'= | 15 mm | | |
| Radius R = | 5 mm | Dicke des Prüfkörpers = | 1,5 mm |

**Tabelle 4**

| **Beispiel** | **Gewichtsverhältnis im Compound PEEK : m-PTFE** | **E-Modul [N/mm²]** | **Bruchspannung [N/mm²]** | **Bruchdehnung [%]** |
|---|---|---|---|---|
| 2 | 20:80 | 900 ± 100 | 14 ± 2 | 200 ± 5 |
| 3 | 40:60 | 1760 ± 120 | 41 ± 5 | 52 ± 6 |
| 4 | 80:20 | 3260 ± 200 | 70 ± 3 | 46 ± 5 |

In Beispiel 4 ergeben sich aufgrund des anderen Herstellungsverfahrens des Prüfkörpers sowie der anderen Prüfkörpergeometrie leichte Abweichungen der Messwerte gegenüber Beispiel 1. Insbesondere entfällt bei dem Herstellungsverfahren der Beispiele 2 bis 4 eine Orientierung der Polymermoleküle in der Schmelze.

### Vergleichsbeispiele 2 und 3

Während in den Beispielen 2 bis 4 die Prüfkörper aus Prüfplatten ausgestanzt wurden, die im Schmelzepressverfahren hergestellt worden waren, erfolgte die Prüfkörperfertigung bei den Vergleichsbeispielen 2 und 3 durch Ausstanzen aus einer Schälfolie der Stärke 1,5 mm, die durch Abschälen von einem zylindrischen Körper mit Innendurchmesser 40 mm und Außendurchmesser 75 mm hergestellt wurden. Es wurde auch hier ein Prüfkörper 40 gemäß Figur 5 (FD-105 nach DIN EN ISO 12086) verwendet.

Der zylindrische Körper wurde durch Pressen der Polymerpartikelmischung bei 300 bar und Sintern im Umluftofen bei 362°C während 3 Tagen hergestellt.

Die verwendete Standard-PTFE-Type war Dyneon TF 1750, die PEEK-Type Victrex 150 XF. Die Compounds wurden in einem GLASS Vakuum-Allround-Schnellmischer VAS 600 hergestellt bei einer Mischzeit von 6 min.

**Tabelle 5**

| **Vergleichsbeispiele** | **Gewichtsverhältnis im Compound Standard-PTFE : PEEK** | **E-Modul [N/mm² ]** | **Bruchspannun g [N/mm²]** | **Bruchdehnung g [%]** |
|---|---|---|---|---|
| 2 | 80 : 20 | 850 ± 250 | 17 ± 3 | 250 ± 50 |
| 3 | 70 : 30 | 950 ± 250 | 15 ± 3 | 9 ± 3 |

Tabelle 5 weist die Werte für den E-Modul, Bruchspannung und Bruchdehnung gemäß DIN EN ISO 527-1 für die Materialien der Vergleichsbeispiele 2 und 3 aus.

## Patentansprüche

1. Polymercompound, umfassend einen Anteil eines voll fluorierten thermoplastischen Polymermaterials, welches schmelzverarbeitbares PTFE umfasst, sowie einen Anteil mindestens eines weiteren, von dem voll fluorierten thermoplastischen Polymermaterial verschiedenen Hochleistungs-Polymers, ausgewählt aus Polyetherketon und Polyetheretherketon sowie Copolymeren und Derivaten dieser Polymere und Copolymere, wobei das Compound eine homogene Verteilung der Anteile der Polymere und des Polymermaterials aufweist, wobei das schmelzverarbeitbare PTFE ein TFE-Copolymer ist mit einem Comonomer-Gehalt von weniger als 3,5 Mol-%, und wobei das Verhältnis der Anteile an voll fluoriertem thermoplastischem Kunststoffmaterial zu den Anteilen des mindestens einen weiteren Hochleistungs-Polymeren ca. 20 : 80 bis ca. 70 : 30 beträgt.

2. Compound nach Anspruch 1, **dadurch gekennzeichnet, dass** das voll fluorierte thermoplastisch verarbeitbare Polymermaterial ca. 50 Gew.-% oder mehr an schmelzverarbeitbarem PTFE umfasst.

3. Compound nach Anspruch 1 oder 2, **dadurch gekennzeichnet, dass** das Comonomer ausgewählt ist aus Hexafluorpropylen, Perfluoralkylvinylether, Perfluor-(2,2-dimethyl-1,3-dioxol) und Chlortrifluorethylen.

4. Compound nach einem der Ansprüche 1 bis 3, **dadurch gekennzeichnet, dass** das Compound im Wege der Schmelzecompoundierung hergestellt ist.

5. Compound nach einem der Ansprüche 1 bis 4, **dadurch gekennzeichnet, dass** das Hochleistungspolymer PEEK umfasst.

6. Compound nach Anspruch 5, **dadurch gekennzeichnet, dass** die Bruchdehnung des Compounds ca. 20 % oder mehr, insbesondere 30 % oder mehr beträgt.

7. Compound nach einem der Ansprüche 1 bis 6, **dadurch gekennzeichnet, dass** das Compound im Wesentlichen porenfrei ist.

8. Compound nach einem der Ansprüche 1 bis 7, **dadurch gekennzeichnet, dass** das Compound Additive umfasst, insbesondere mit Anteilen von bis ca. 60 Gew.-% am Gesamtgewicht des Compounds, wobei optional als Additive ein oder mehrere Füllstoffe enthalten sind, welche vorzugsweise ausgewählt sind aus PTFE, Kohlefasern, Glasfasern, Ruß und Graphit.

9. Bauteil, insbesondere mechanisch belastetes Bauteil, hergestellt unter Verwendung eines Compounds gemäß einem oder mehreren der Ansprüche 1 bis 8.

10. Bauteil nach Anspruch 9, **dadurch gekennzeichnet, dass** das Bauteil als Rohr oder flexibler Schlauch ausgebildet ist.

11. Elektrisches Kabel, insbesondere Hochfrequenzkabel, mit einer Isolierung, hergestellt unter Verwendung eines Compounds gemäß einem der Ansprüche 1 bis 8, wobei insbesondere das Kabel ein Koaxialkabel ist, und wobei optional die Isolierung eine Schaumstruktur aufweist.

12. Bauteil nach Anspruch 9, **dadurch gekennzeichnet, dass** das Bauteil als Spritzgussteil hergestellt ist.

13. Bauteil nach Anspruch 9, **dadurch gekennzeichnet, dass** das Compound geschäumt ist.

## Claims

1. Polymer compound, comprising a proportion of a fully fluorinated thermoplastic polymer material which includes melt-processible PTFE, and a proportion of at least one further high-performance polymer different from the fully fluorinated thermoplastic polymer material and selected from polyether ketone and polyether ether ketone and copolymers and derivatives of these polymers and copolymers, the compound having a homogeneous distribution of the proportions of the polymers and the polymer material, the melt-processible PTFE being a TFE copolymer with a comonomer content of less than 3.5 mol %, and the ratio of the proportions of fully fluorinated thermoplastic material to the proportions of the at least one further high-performance polymer being from about 20 : 80 to about 70 : 30.

2. Compound in accordance with claim 1, **characterized in that** the fully fluorinated, thermoplastically processible polymer material includes about 50 % by weight or more of melt-processible PTFE.

3. Compound in accordance with claim 1 or 2, **characterized in that** the comonomer is selected from hexafluoropropylene, perfluoroalkyl vinyl ether, perfluoro-(2,2-dimethyl-1,3-dioxole) and trifluorochloroethylene.

4. Compound in accordance with any one of claims 1 to 3, **characterized in that** the compound is produced by way of melt compounding.

5. Compound in accordance with any one of claims 1 to 4, **characterized in that** the high-performance polymer includes PEEK.

6. Compound in accordance with claim 5, **characterized in that** the breaking elongation of the compound is about 20 % or more, in particular, 30 % or more.

7. Compound in accordance with any one of claims 1 to 6, **characterized in that** the compound is essentially pore-free.

8. Compound in accordance with any one of claims 1 to 7, **characterized in that** the compound includes additives, in particular, with amounts of up to about 60 % by weight of the overall weight of the compound, one or more filler materials, preferably selected from PTFE, carbon fibres, glass fibres, carbon black and graphite, being optionally included as additives.

9. Component, in particular, mechanically loaded component, produced using a compound in accordance with one or more of claims 1 to 8.

10. Component in accordance with claim 9, **characterized in that** the component is configured as a pipe or a flexible hose.

11. Electric cable, in particular, high frequency cable, with an insulation produced using a compound in accordance with one of claims 1 to 8, the cable, in particular, being a coaxial cable, and the insulation optionally having a foam structure.

12. Component in accordance with claim 9, **characterized in that** the component is produced as an injection moulded part.

13. Component in accordance with claim 9, **characterized in that** the compound is foamed.

## Revendications

1. Composé polymère comprenant une certaine proportion d'un matériau polymère thermoplastique entièrement fluoré, qui comprend un PTFE pouvant être travaillé par fusion, ainsi qu'une certaine proportion d'au moins un autre polymère haute performance, différent du matériau polymère thermoplastique entièrement fluoré, choisi dans le groupe consistant en la polyéthercétone, la polyétheréthercétone et la polyétherarylcétone, ainsi que les copolymères et dérivés de ces polymères et copolymères, le composé présentant une répartition homogène des proportions des polymères et du matériau polymère, le PTFE pouvant être travaillé par fusion étant un copolymère de TFE ayant une teneur en comonomère inférieure à 3,5 % en moles.

2. Composé selon la revendication 1, **caractérisé en ce que** le matériau polymère pouvant subir une mise en oeuvre thermoplastique et entièrement fluoré comprend environ 50 % en poids ou plus de PTFE pouvant être travaillé par fusion.

3. Composé selon la revendication 1 ou 2, **caractérisé en ce que** le comonomère est choisi parmi l'hexafluoropropylène, les perfluoralkylvinyléthers, le perfluoro-(2,2-diméthyl-1,3-dioxole) et le chloro-trifluoréthylène.

4. Composé selon l'une des revendications 1 à 3, **caractérisé en ce que** le composé est fabriqué au cours du mélange à l'état fondu.

5. Composé selon l'une des revendications 1 à 4, **caractérisé en ce que** le rapport entre la proportion du matériau plastique thermoplastique entièrement fluoré et la proportion de l'autre polymère haute performance, en particulier le PEEK, est d'environ 20:80 à 70:30.

6. Composé selon la revendication 5, **caractérisé en ce que** l'allongement à la rupture du composé est d'environ 20 % ou plus, en particulier de 30 % ou plus.

7. Composé selon l'une des revendications 1 à 6, **caractérisé en ce que** le composé est pour l'essentiel exempt de pores.

8. Composé selon l'une des revendications 1 à 7, **caractérisé en ce que** le composé comprend des additifs, en particulier selon des proportions allant jusqu'à environ 60 % en poids par rapport au poids total du composé, une ou plusieurs matières de charge, qui de préférence sont choisies parmi le PTFE, les fibres de carbone, les fibres de verre, le noir de carbone et le graphite, étant de préférence présentes en tant qu'additifs en option.

9. Composant, en particulier composant soumis à des sollicitations mécaniques, fabriqué par utilisation d'un composé selon l'une ou plusieurs des revendications 1 à 8.

10. Composant selon la revendication 9, **caractérisé en ce que** le composant est configuré sous forme d'un tube ou d'un tuyau souple.

11. Câble électrique, en particulier câble haute fréquence, possédant une isolation, fabriqué par utilisation d'un composé selon l'une des revendications 1 à 8, le câble étant en particulier un câble coaxial, l'isolation comportant en option une structure expansée.

12. Composant selon la revendication 9, **caractérisé en ce que** le composant est fabriqué sous forme d'une pièce moulée par injection.

13. Composant selon la revendication 9, **caractérisé en ce que** le composé est expansé.
